# EUROPÄISCHE PATENTSCHRIFT

(11) **EP 0 548 859 B1**
(45) Veröffentlichungstag und Bekanntmachung des Hinweises auf die Patenterteilung: **29.03.1995**
(21) Anmeldenummer: 92121645.3
(22) Anmeldetag: 18.12.1992
(51) Int. Cl.: B21D 26/02

(54) **Verfahren zum Herstellen von Fahrwerksträgern**
Method of making support elements for vehicles
Procédé de fabrication d'éléments de support de véhicules

(30) Priorität: 20.12.1991 DE 4142325
(43) Veröffentlichungstag der Anmeldung: 30.06.1993
(73) Patentinhaber: Bayerische Motoren Werke Aktiengesellschaft, 80788 München (DE)
(72) Erfinder: Günther, Bernd, W-8046 Garching (DE); Denk, Rudolf, W-8031 Geisenbrunn (DE)

(56) Entgegenhaltungen:
- EP-A- 0 089 520
- EP-A- 0 497 438
- DE-A- 2 816 750
- GB-A- 2 240 944
- US-A- 3 103 244
- US-A- 3 583 188

## Beschreibung

Die Erfindung bezieht sich auf ein Verfahren zum Herstellen von hohlen Metallkörpern mit mindestens einem Umformschritt nach dem Oberbegriff des 1. Anspruchs, wie es z.B. aus dem Dokument EP-A-0 089 520 bekannt ist.

Unter Fahrwerksteilen werden all diejenigen Teile verstanden, die zum Fahrwerk oder zum Antriebsstrang gehören, also insbesondere Gelenk-/Antriebswellen, Querträger, Rahmen oder Hilfsrahmen, Radführungsglieder oder ähnliches.

Allgemein werden Aluminiumrohre, die höheren Belastungen ausgesetzt sind und damit größere Wandstärken aufweisen müssen, durch Strangpressen hergestellt. Hierzu verwendet man üblicherweise aushärtbare Aluminiumlegierungen, wie beispielsweise die Legierung AlMgSi0,5 oder AlMgSi0,7.

Werden aus diesen Legierungen hergestellte stranggepreßte Rohre zu Fahrwerksteilen von Kraftfahrzeugen verarbeitet, so sind eine Vielzahl von hintereinander durchzuführenden Umformungsschritten notwendig, zu denen auch als ein Umformschritt das Hydroumformen oder Innenhochdruckumformverfahren zählt. Überraschenderweise wurde jedoch festgestellt, daß stranggepreßte Aluminiumrohre aus den eingangs genannten Legierungen die Hydroumformung bei vorangegangenen anderen Umformungen nicht gestatteten, da offensichtlich das Umformvermögen des Werkstoffes erschöpft war. Der Versuch, vor dem Hydroumformen zwischenzuglühen, schlug fehl, da der Werkstoff entweder aushärtete oder zu weich wurde, also seine Festigkeit verlor.

Aufgabe der vorliegenden Erfindung ist es, ein Ausgangsmaterial zum Herstellen von Fahrwerksteilen aus Aluminiumlegierungen vorzuschlagen, mit welchem die notwendigen Umformschritte problemlos durchgeführt werden können.

Diese Aufgabe wird erfindungsgemäß durch die Kombination der Merkmale des ersten Anspruchs gelöst. Es wurde überraschenderweise gefunden, daß man auf naturharte Aluminiumlegierungen in Form längsnahtgeschweißter Rohre zurückgreifen muß, um diese Rohre mit Hilfe des Hydroumform-Verfahrens problemlos kaltumformen zu können. Die Verwendung von ohne Zusatzwerkstoffe längsnahtgeschweißten Rohren hat den Vorteil, daß ihre Wandstärke wesentlich maßgenauer ist als die stranggepreßter Rohre. Darüber hinaus sind auch die Gewichtsschwankungen der längsnahtgeschweißten Rohre wesentlich geringer als die vergleichbarer stranggepreßter Rohre. Auch ist die Herstellung längsnahtgeschweißter Rohre aus den angegebenen Legierungen wesentlich preiswerter als die stranggepreßter Rohre gleicher Materialgüte.

Ein weiterer Vorteil der Erfindung liegt darin, daß die aus einer naturharten Aluminiumlegierung hergestellten längsnahtgeschweißten Rohre vor dem Innenhochdruckumformen zwischengeglüht werden, da - bei mehreren Umformschritten - beim üblicherweise als letzten Umformschritt durchgeführten Innenhochdruckumformverfahren die Umformgrenzen des Werkstoffes überschritten werden.

Als vorteilhaft hat es sich erwiesen, die längsnahtgeschweißten Rohre aus Blechtafeln aus AlMgMn-Legierungen herzustellen, wobei die Blechtafeln aufgrund der geforderten Tragfähigkeit ohne weiteres Blechstärken von 3 bis 5 mm aufweisen können. Diese Blechtafeln können problemlos zu Rohren mit Außendurchmessern von 70 mm an aufwärts aufweisen. Somit können Fahrwerksteile aus Aluminium hergestellt werden, die die erforderliche Festigkeit aufweisen, ohne Einschränkungen bei den gewünschten oder notwendigen Umformverfahren in Kauf nehmen zu müssen.

Es ist zwar allgemein bekannt, längsnahtgeschweißte Rohre aus Aluminium aus Blechtafeln herzustellen. Dieses Verfahren wird bisher jedoch nur eingesetzt für Rohre mit Wandstärken, die im Strangpressen nicht erzielbar sind, als Wandstärken von kleiner als 2,5 mm.

Ganz allgemein lassen sich mit dem erfindungsgemäßen Verfahren Fahrwerksteile ausgezeichnet herstellen. Hierbei kann praktisch jede gewünschte Raumform aus den Rohren hergestellt werden. Die einzelnen so hergestellten Teile können problemlos zu einem Ganzen verbaut werden, beispielsweise durch Schweißen. Es können auch andere, nicht nach der Erfindung hergestellte Teile, z.B. Anbauteile, wie Hülsen, Flansche, Bleche, angebracht werden.

## Patentansprüche

1. Verfahren zum Herstellen von hohlen Metallkörpern in mindestens einem Umformschritt für Fahrzeuge, insbesondere Fahrwerksteile für Personenkraftwagen, wobei als Rohlinge ohne Zusatzwerkstoff längsnahtgeschweißte Rohre aus einer naturharten Aluminiumlegierung verwandt werden, die mit Hilfe des Innenhochdruckumformes kaltumgeformt werden, dadurch gekennzeichnet, daß die Rohlinge eine Mindestwandstärke von 2,5 mm aufweisen und daß sie vor dem Innenhochdruckumformen einem Zwischenglühen unterworfen werden, wobei davor mindestens ein Umformschritt liegt.

2. Verfahren nach Anspruch 1,
dadurch gekennzeichnet, daß die Rohlinge aus Blechtafeln aus naturharten Legierungen der Basis AlMgMn hergestellt werden.

3. Verfahren nach einem der vorangegangenen Ansprüche, dadurch gekennzeichnet, daß die Blechtafeln eine Wandstärke von 3 bis 5 mm aufweisen.

4. Verfahren nach einem der vorangegangenen Ansprüche, dadurch gekennzeichnet, daß die Rohre einen Außendurchmesser von 50 mm bis größer 100 mm aufweisen.

## Claims

1. A method for the manufacture of hollow metal bodies for vehicles, especially chassis parts for passenger cars, which includes at least one forming stage, wherein longitudinal-seam welded tubes of a self-hardening aluminium alloy without additional materials are used as blanks and are cold-formed using internal high pressure forming, characterised in that the blanks have a minimum wall thickness of 2.5 mm and that they undergo intermediate annealing prior to internal high pressure forming, with at least one preceding forming stage.

2. A method according to claim 1,
characterised in that the blanks of sheet-metal plates are manufactured from self-hardening AlMgMn alloys.

3. A method according to either claim 1 or 2, characterised in that the sheet-metal plates have a wall thickness of 3 to 5 mm.

4. A method according to any one of the preceding claims, characterised in that the tubes have an external diameter of 50 mm to above 100 mm.

## Revendications

1. Procédé de fabrication de corps métalliques creux dans au moins une séquence de formage pour véhicules, en particulier des pièces d'un ensemble de déplacement pour voiture automobile particulière, procédé dans lequel on utilise comme ébauche sans matière additionnelle des tubes à cordon de soudure longitudinale, qui sont formés à froid à l'aide du formage interne à haute pression, procédé caractérisé en ce que les ébauches présentent une épaisseur de paroi d'au moins 2,5 mm et en ce qu'elles sont soumises avant le formage interne à haute pression à une opération intermédiaire de recuit, au moins une séquence de formage ayant lieu auparavant.

2. Procédé selon la revendication 1, caractérisé en ce que les ébauches sont fabriquées à partir de plaques de tôle en alliages de dureté naturelle du type AlMgMn.

3. Procédé selon l'une des revendications précédentes, caractérisé en ce que les plaques de tôle présentent une épaisseur de paroi de 3 à 5 mm.

4. Procédé selon l'une des revendications précédentes, caractérisé en ce que les tubes présentent un diamètre extérieur de 50 mm jusqu'à plus de 100 mm.
